(19) Europäisches Patentamt

European Patent Office

Office européen des brevets

(11) **EP 1 065 799 B1**

(12) **EUROPEAN PATENT SPECIFICATION**

(45) Date of publication and mention
of the grant of the patent:
**26.04.2006 Bulletin 2006/17**

(51) Int Cl.:
**H04B 1/707** *(2006.01)*

(21) Application number: **99305245.5**

(22) Date of filing: **02.07.1999**

(54) **Multi-user detection for wideband CDMA**

Mehrbenutzer Detektion für Breitbandigen CDMA

Détection multiutilisateur pour AMDC à large bande

(84) Designated Contracting States:
**AT BE CH CY DE DK ES FI FR GB GR IE IT LI LU MC NL PT SE**

(43) Date of publication of application:
**03.01.2001 Bulletin 2001/01**

(73) Proprietor: **LUCENT TECHNOLOGIES INC.
Murray Hill**, **New Jersey 07974-0636 (US)**

(72) Inventor: **Karimi, Hamid R.
Swindon,
Wiltshire SN5 5BJ (GB)**

(74) Representative: **Williams, David John et al
Lucent Technologies UK Limited,
5 Mornington Road
Woodford Green,
Essex IG8 0TU (GB)**

(56) References cited:

- KARIMI H R ET AL: "A novel and efficient solution to block-based joint-detection using approximate Cholesky factorization" NINTH IEEE INTERNATIONAL SYMPOSIUM ON PERSONAL, INDOOR AND MOBILE RADIO COMMUNICATIONS (CAT. NO.98TH8361), PROCEEDINGS OF NINTH INTERNATIONAL SYMPOSIUM ON PERSONAL, INDOOR, AND MOBILE RADIO COMMUNICATIONS (PIMRC'98), BOSTON, MA, USA, 8-11 SEPT. 1998, pages 1340-1345 vol.3, XP002112134 1998, New York, NY, USA, IEEE, USA ISBN: 0-7803-4872-9

- MAYER J ET AL: "Realtime feasibility of joint detection CDMA" EPMCC '97. SECOND EUROPEAN PERSONAL MOBILE COMMUNICATIONS CONFERENCE TOGETHER WITH 3. ITG-FACHTAGUNG, MOBILE KOMMUNIKATION, BONN, GERMANY, 30 SEPT.-2 OCT. 1997, no. 145, pages 245-252, XP002112135 ITG-Fachberichte, 1997, VDE-Verlag, Germany ISSN: 0341-0196

- OJANPERA T ET AL: "Qualitative comparison of some multiuser detector algorithms for wideband CDMA" VTC '98. 48TH IEEE VEHICULAR TECHNOLOGY CONFERENCE. PATHWAY TO GLOBAL WIRELESS REVOLUTION (CAT. NO. 98CH36151), VTC '98. 48TH IEEE VEHICULAR TECHNOLOGY CONFERENCE. PATHWAY TO A GLOBAL WIRELESS REVOLUTION, OTTAWA, ONT., CANADA, 18-21 MAY 1998, pages 46-50 vol. 1, XP002126104 1998, New York, NY, USA, IEEE, USA ISBN: 0-7803-4320-4

- TOSKALA A ET AL: "ETSI WCDMA for UMTS" 1988 IEEE 5TH INTERNATIONAL SYMPOSIUM ON SPREAD SPECTRUM TECHNIQUES AND APPLICATIONS - PROCEEDINGS. SPREAD TECHNOLOGY TO AFRICA (CAT. NO.98TH8333), PROCEEDINGS OF ISSSTA'98 INTERNATIONAL SYMPOSIUM ON SPREAD SPECTRUM TECHNIQUES AND APPLICATIONS, SUN C, pages 616-620 vol.2, XP002126105 1998, New York, NY, USA, IEEE, USA ISBN: 0-7803-4281-X

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

This invention relates to communication systems. In particular, it relates to mobile communications in a multirate environment using wideband code division multiple access (WCDMA)

In the multi-rate environment of the WCDMA uplink, the sampled signal block received at the base-station detector can be written as a vector $\underline{r} = A\underline{x} + \underline{n}$ where $\underline{x}$ is the vector of bits (or symbols) transmitted by all K mobile users in the cell, $\underline{n}$ is the noise vector and A is a sparse matrix which is a function of the user spreading codes and the radio propagation channel. The objective of multi-user detection (MUD) is to estimate the vector $\underline{x}$ of all user symbols, given the received vector $\underline{r}$ and the matrix A.

The computational complexity of MUD can be prohibitive for a large number of users and is furthermore dependent on the structure of matrix A.

### Description of the Prior Art

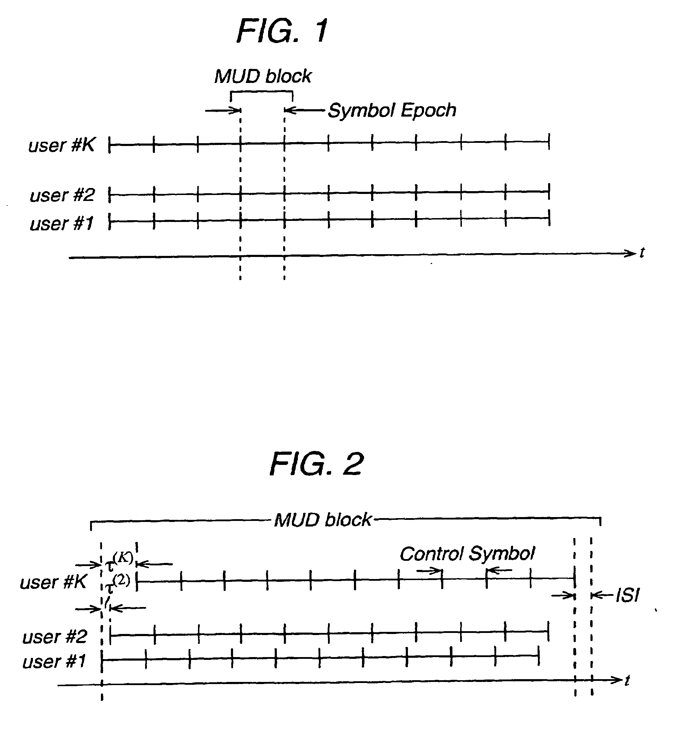

A communication system such as a mobile telephone communication system, may typically have several users using the system simultaneously. The mobile stations may be synchronised or asynchronous. Figure 1 illustrates the uplink transmissions of a number K of synchronised mobile stations. In the absence of inter-symbol interference (or when the delay spread is much smaller than the symbol period) it can be seen from the figure the $n$th symbol of any user interferes with the $m$th symbol of another user if and only if $m = n$. The result of this is that joint detection of the user symbols $\underline{x}^1 \ldots \underline{x}^K$ can be achieved at the base station receiver by considering one single symbol epoch at a time.

In an asynchronous uplink scenario, however, the base station receiver needs to process signals transmitted by any number K uncoordinated mobile stations. At a symbol level, the maximum asynchronous delay $\tau_{max}$, between the transmission of any two mobiles is less than a common-symbol epoch ($Q_c$ chip intervals). A control symbol epoch is chosen since this is common among all users. Figure 2 shows such a system and it is seen that the $n$th symbol of a user interferes not only with the $n$th, but also with ($n \pm 1$) th symbols of all other users. Accordingly, joint detection of the user symbols can only be performed optimally by considering a signal block of an appropriate length. The block needs to be many symbols long.

A natural MUD block length for WCDMA transmission is the time-slot period. There are two good reasons for this. Firstly, the channel impulse response can be assumed to be fixed over a time-slot interval (625 μs) resulting in simplifications and reductions in the complexity of the multi-user detector. Secondly, longer block lengths (eg a frame period of 10 ms) can result in unacceptable latencies. This is especially the case for the detection of some of the control bits which may be required within a time slot period, such as power control or rate information.

Consider K asynchronous mobile stations, each transmitting time slots with relative delays of $\tau^{(1)} \leq \tau^{(2)} \leq \ldots \leq \tau^{(K)}$ "samples" with respect to an arbitrary user labelled user 1 ($\tau^{(1)} = 0$ by definition). As can be seen from Figure 2 the MUD block needs to be $\eta(N_cQ_c+W-1)+ \tau^{(K)}$ samples long in order to account for Inter-Symbol Interference (ISI) and asynchronous delays. ISI represents the 'spill-over' between consecutive symbols transmitted by a user due to delays in the propagation channel. Note that the block-length is time-varying and depends on the maximum delay $\tau^{(K)} \leq \eta Q_c$-1, and is therefore upper bounded by

MUD Block Length $\leq \eta([N_c+1]Q_c+W-1)$-1 samples

Let $^{(m)}\underline{r} \in C^{\eta(N_cQ_c+W-1)+ \tau}$ represent the MUD signal block at the output of the base station's antenna-m receive filter when sampled at $\eta$ times the chip rate. This may then be modelled as

$$^{(m)}\underline{r} = {}^{(m)}\tilde{A}\underline{x} + {}^{(m)}\underline{n} \quad (1)$$

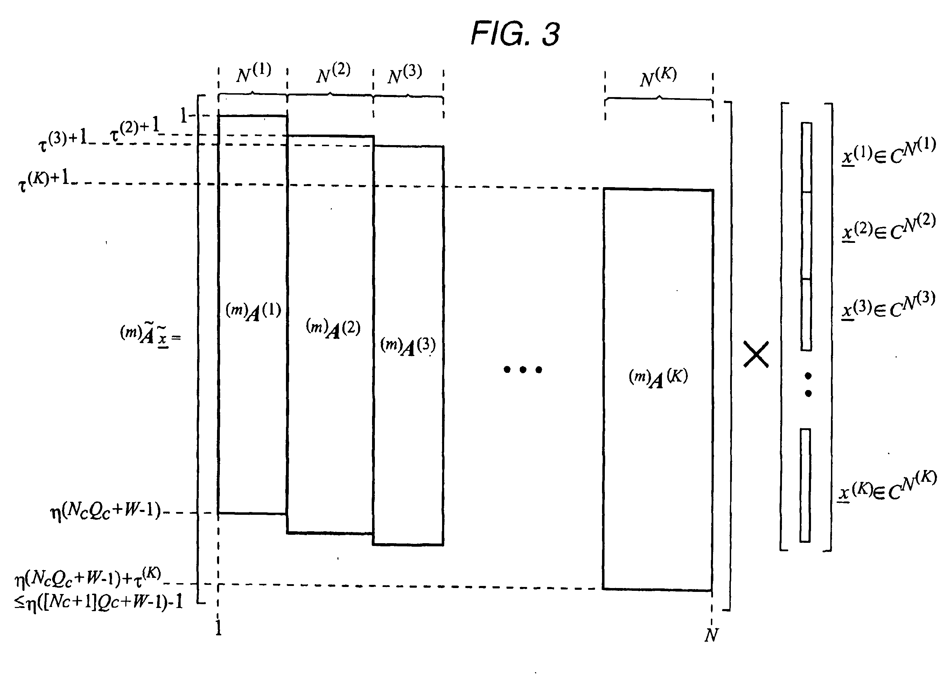

where $^{(m)}\tilde{A} \in C^{[\eta(N_cQ_c+W-1)+\tau]xN}$ is the multi-user convolution matrix at antenna - m, $\underline{x} = [\underline{x}^{(1)T} \ldots \underline{x}^{(K)T}]^T \in R^N$ is the vector of $N = \Sigma_k N^{(k)}$ (data and control) symbols transmitted by all users within one time-slot and additive noise at antenna-m is given by $^{(m)}\underline{n} \in C^{\eta(N_cQ_c+W-1)+\tau \, (K)}$. The nature of the $^{(m)}\tilde{A}\underline{x}$ product can be further clarified by an expansion of equation (1) which is shown graphically in Figure 3 for K asynchronous users .

In Figure 3, $^{(m)}\tilde{A}^{(k)} \in C^{[\eta(N_cQ_c+W-1)\times(K)N}$ is the convolution matrix for user k at antenna-m as defined and $\underline{x}^{(k)(K)} \in R^N$ is the vector of all $N^{(K)}$ symbols transmitted by user k over a time-slot period.

Consider now a two-user uplink scenario. Suppose that user 1 accesses a 2-code voice service transmitting $N_1^{(1)} = N_c = 10$ control symbols, $\underline{x}_1^{(1)} = \underline{x}_c^{(1)}$, with a spreading of $Q_1^{(1)} = Q_c = 256$ and $N_2^{(1)} = N_d^{(1)} = 20$ data symbols, $\underline{x}_2^{(1)} = \underline{x}_d^{(1)}$, with a spreading of $Q_2^{(1)} = Q_d^{(1)} = 128$. User 2 accesses a 3-code data service transmitting $N_1^{(2)} = N_c = 10$ control symbols, $\underline{x}_1^{(2)} = \underline{x}_c^{(2)}$, with a spreading of $Q_1^{(2)} = Q_c = 256$, $N_2^{(2)} = N_{d1}^{(2)} = 20$ data symbols, $\underline{x}_2^{(2)} = \underline{x}_{d1}^{(2)}$, with a spreading of $Q_2^{(2)} = Q_{d1}^{(2)} = 128$ and $N_3^{(2)} = N_{d2}^{(2)} = 40$ data symbols, $\underline{x}_3^{(2)} = \underline{x}_{d2}^{(2)}$, with a spreading of $Q_3^{(2)} = Q_{d2}^{(2)} = 64$.

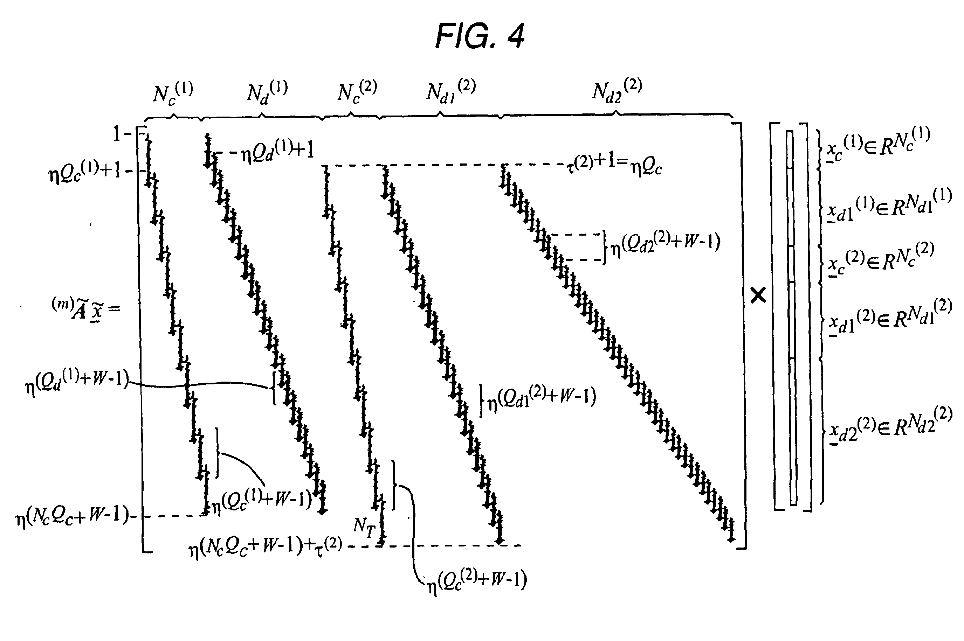

Furthermore, user 2 has a maximum asynchronous delay of $\tau^{(K)} = \eta Q_c - 1$ with respect to user 1. The product $^{(m)}\underline{\tilde{A}} \underline{x}$ is graphically illustrated in Figure 4. In the Figure,
the first two groups of $N_c^{(1)}$ and $N_d^{(1)}$ columns relate to the first user; $N_c^{(1)}$ shows the control symbols and $N_d^{(1)}$ shows data symbols. The following three groups of $N_c^{(2)}$, $N_{d1}^{(2)}$ and $N_{d2}^{(2)}$ columns relate to the second user and show, respectively, control symbols and the two sets of data symbols for user 2. The length of each vertical line represents $Q+W-1$ which is equivalent to the length Q of the spreading sequence when filtered by a channel of length W chips. The chip oversampling factor in this example is $\eta$.

The objective of a multi-user detection algorithm is to "reverse" the influence of the convolution matrix, $^{(m)}\tilde{A}$, on the transmitted information. Accordingly, MUD can be computationally very complex, particularly for a large number of users and is dependant upon the structure of matrix $^{(m)}\tilde{A}$.

The present invention arose in an attempt to reduce computational complexity for multi-rate multi-user detection, in WCDMA (wideband code division multiple access) systems.

It is known from a paper by KARIMI H R ET AL entitled "A novel and efficient solution to block-based joint-detection using approximate Cholesky factorization" NINTH IEEE INTERNATIONAL SYMPOSIUM ON PERSONAL, INDOOR AND MOBILE RADIO COMMUNCATIONS (CAT.NO.98TH8361), PROCEEDINGS OF NINTH INTERNATIONAL SYMPOSIUM ON PERSONAL, INDOOR, AND MOBILE RADIO COMMUNCIATIONS (PIMRC'98), BOSTON, MA, USA, 8-11 SEPT. 1998, pages 1340-1345 vol.3. XP002112134 1998, New York, NY, IEEE, USA ISBN: 0-7803-4872-9 to provide a method for detecting user symbols in a multi-user environment, of a code division multiple access, CDMA, communication system, the method comprising altering the order in which information symbols are estimated so as to group user symbols in a block-banded structure

## Summary of the Invention

The present invention is characterised over the disclosure of the above mentioned Karimi paper in that the multi-user environment is multi-rate, and each user transmits control symbols and at least one group of data symbols, and wherein a convolution matrix $^{(m)}A$ is formed which is block-banded, each block including a number of columns relating to the number of groups of data or symbols transmitted by the users, and grouped according to the respective control symbols and in an order related to the order at which symbols arrive at a receiver.

If control symbols are not considered in the multi-user detection problem, then the data symbols with the longest duration transmitted by each user effectively take up the role of control symbols. Other grouping methods may be used.

## Brief Description of the Drawings

Embodiments of the invention will now be described, by way of example only, with reference to the accompanying drawings, in which:

Figure 1 shows uplink transmissions, in a WCDMA system, of K synchronised mobile stations;
Figure 2 shows uplink transmission of K asynchronous mobile stations;
Figure 3 shows a convolution matrix for K users at the *m*th antenna (antenna-m);
Figure 4 shows the convolution matrix for two users;
Figure 5 shows a column-permutated multi-user convolution matrix in the form of a block banded structure; and
Figure 6 shows a column-permutated convolution matrix for two users.

It is described above that the signal, $^{(m)}\underline{r}$, at the output of the antenna-m receive filter can always be represented as a linear function of a multi-user convolution matrix, $^{(m)}\tilde{A}$, the vector of user symbols, $\underline{\tilde{x}}$, and additive noise $^{(m)}\underline{n}$.

The objective of a multi-user detection algorithm is to eliminate the effects of multiple-access and inter-symbol interference by "reversing" the influence of the convolution matrix, $^{(m)}\tilde{A}$, on the transmitted information. As such, efficient implementation of MUD relies heavily on the exploitation of the structure and sparse nature of $^{(m)}\tilde{A}$.
However, as was seen earlier, while $^{(m)}\tilde{A}$ is always sparse, this cannot be readily exploited since the detailed structure of $^{(m)}\tilde{A}$ is highly dependent on the number of users active in the cell, their relative delays and mix of data rates. This issue is addressed in embodiments of the invention by considering certain permutations of $^{(m)}\tilde{A}$ which render its structure more predictable and hence computationally friendly.

Consider the multi-user convolution matrix $^{(m)}\tilde{A}$ of Figure 3, corresponding to a MUD block-length of one time-slot. The matrix has an irregular structure which is a function of the asynchronous delays between the mobile transmissions, as reflected in the offsets between sub-matrices $^{(m)}A^{(k)}$ where k=1 ... K. This structure is a direct result of the fact that the elements of vector $\underline{x}$ (unknown information symbols) are grouped together according to the mobile user from which they originate. A benefit of this ordering scheme is that the symbol estimates at the output of a MUD algorithm could be readily assigned to the different users.

The inventor has realised that it is possible to obtain a more predictable structure for $^{(m)}\tilde{A}$ by changing the order in which the information symbols are estimated.

This would be equivalent to a scrambling of the elements of vector $\underline{\tilde{x}}$ and hence the columns of matrix $^{(m)}\tilde{A}$ as described

by $^{(m)}\tilde{A}\underline{x} = {}^{(m)}\tilde{A}V^TV\underline{x} = {}^{(m)}A\underline{x},$ where V is a unitary permutation matrix and $V^TV=I$. Following such a permutation, the model of Eq. (1) can be written as

$$^{(m)}\underline{r} = {}^{(m)}A\underline{x} + {}^{(m)}\underline{n}$$

$$(2)$$

Inspection of the structure of $^{(m)}\tilde{A}$ reveals that a suitable permutation is one that groups the user symbols according to their respective control symbols and in a fashion which reflects the order in which the symbols arrive at the receiver. Such a permutation imposes a block-banded structure upon matrix $^{(m)}\tilde{A}$.

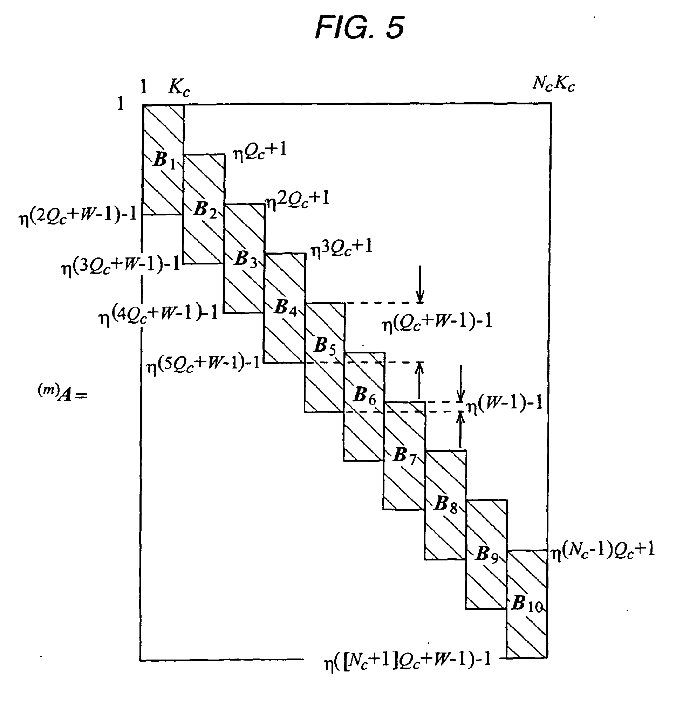

Note that for any multi-code scenario or mix of data rates, it is possible to derive a column-permuted multi-user convolution matrix $^{(m)}A$ which is block-banded. Furthermore, when representing a block-length of one time-slot, $^{(m)}A$ can be completely defined via sub-matrices $^{(m)}B_1 ... {}^{(m)}B_{N_c}$ each containing $K_c$ columns and (a maximum of) $\eta(2Q_c+W-1)-1$ rows, as shown in Figure 5.

In the Figure,

$$K_c = \sum_{k=1}^{K} \sum_{i=1}^{M^{(k)}} \frac{Q_c}{Q_i^{(k)}}$$

The column permutation process may be described as follows. For every control-symbol epoch, user k synchronously transmits a total of $\xi^{(k)} = \Sigma_i Q_c/Q_i^{(k)}$ (i=1 ... $M^{(k)}$) symbols (one control and $\xi^{(k)}-1$ data). As a first step, shuffle the columns of $^{(m)}A^{(k)} \forall k=1 ... K$, such that those columns corresponding to the above symbols are placed adjacent to one another. This ensures that each of the $^{(m)}A^{(k)}$ sub-matrices are block-banded, consisting of $N_c$ blocks (one block for each control symbol in a time-slot) each of $\xi^{(k)}$ columns. As a second step, shuffle the generated blocks across the boundaries of the $^{(m)}A^{(k)} \forall k=1 ... K$ so that the blocks corresponding to control symbols which arrive at the base station at an earlier time are placed in the left-most columns. This ensures that the total convolution matrix $^{(m)}A$ is block-banded, consisting of $N_c$ blocks each of $\Sigma_k \xi^{(k)} = K_c$ columns.

The validity of the above concept can be illustrated by considering a specific example.

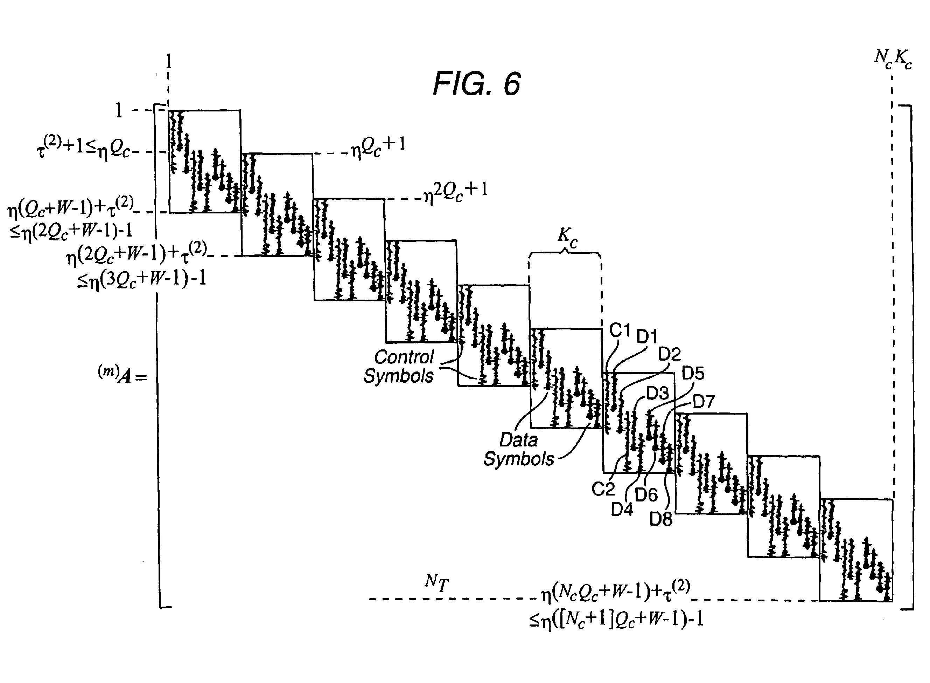

An arbitrary scenario will be considered where K=2 users are active on the uplink. User 1 transmits with spreading factors of $Q_1^{(1)} = 256$ and $Q_2^{(1)} = 128$, while user 2 transmits with spreading factors of $Q_1^{(2)} = 256$, $Q_2^{(2)} = 128$ and $Q_3^{(2)} = 64$, resulting in the convolution structure depicted in Figure (4). The structure of the permuted matrix $^{(m)}A$, as illustrated by Figure 5, is graphically illustrated in Figure 6, which shows the structure of column-permuted convolution matrix $^{(m)}A = {}^{(m)}\tilde{A}V$ for a K=2 user scenario and chip oversampling factor of $\eta$. Note that the block-length represented corresponds to a WCDMA time-slot containing $N_c=10$ control symbols. Note that while the value of $K_c$ depends on the number of users and their mix of data rates, the overall structure of $^{(m)}A$ does not. Each block comprises a first control signal $C_{-1}$, from user 1, two data symbols $D_1$ and $D_2$ from user 1, a second control symbol $C_2$, from user 2, two data symbols $D_3$ and $D_4$ from the $Nd_1^{(2)}$ data columns of user 2 in Figure (4), and four data symbols $D_5, D_6, D_7, D_8$ from the $Nd_2^{(2)}$ data columns of user 2 in Figure (4).

For the general case of K users, the sub-matrix $^{(m)}B$ may be calculated as follows:

$$^{(m)}B = 0[\eta(2Q_c + W\text{-}1)\text{-}1, K_c]$$

$i_0 = 1$

**for** $k = 1...K$          {$k^{th}$ user}

     **for** $i = 1...M^{(k)}$          {$i^{th}$ code}

         $Q_i^{(k)}$          {Spreading factor}

         $\Gamma_i^{(k)} = Q_c/Q_i^{(k)}$          {No of symbols over $Q_c$ chip epochs}

         $(m)Bi(k) = 0[\eta(\Gamma_i^{(k)}Q_i^{(k)} + W\text{-}1), \Gamma_i^{(k)}]$          {sub-matrix of B for $i^{th}$ code of $k^{th}$ user}


         if code is "*Inphase*"      then $\alpha = \alpha_i^{(k)} = 0$

         if code is "*Quadrature*"      then $\alpha = \alpha_i^{(k)} = 1$


         **for**    $n = 1...\Gamma_i^{(k)}$          {$n^{th}$ symbol}

         $\underline{d} = j^{\alpha}G_i^{(k)} \ \{[\underline{c}_{sc}^{(k)}]_{\eta(n\text{-}1)Q_i^{(k)}+1:\eta nQ_i^{(k)}} \circ \underline{c}_i^{(k)}\} *^{(m)}\underline{h}^{(k)}$

         $[^{(m)}B_i^{(k)}]_{\eta(n\text{-}1)Q_i^{(k)}+1:\eta(nQ_i^{(k)}+W\text{-}1).n} = \underline{d}$


         **end**


         $^{(m)}B(^{(m)}\tau^{(k)}+1 : {}^{(m)}\tau^{(k)}+\eta(\Gamma_i^{(k)}Q_i^{(k)}+W\text{-}1), i_0 : i_0 + \Gamma_i^{(k)}\text{-}1) = {}^{(m)}B_i^{(k)}$

         $i_0 = i_0 + \Gamma_i^{(k)};$

     **end**

   **end**

where for convenience, the number of rows in $^{(m)}B$ is assumed to be at the maximum value of $\eta(2Q_c+W\text{-}1)\text{-}1$ implying the presence of a user with a maximum asynchronous delay of $\tau^{(k)} = \eta Q_c\text{-}1$.

Note that the permutation implicit in the above algorithm implies that the elements o of vector $\underline{x}$ are scrambled versions of the unpermuted symbol vector $\underline{x} = [\underline{x}^{(1)T} ... \underline{x}^{(k)T}]^T$.

Symbols $\underline{x}_i^{(k)}$ transmitted by the $i^{th}$ code of user k may then be extracted from the permuted symbol vector $\underline{x}$ as follows:

$$l_1 = 1$$

**for** k = 1:K

  **for** n = 1 : N_c       {Deal with symbols in the nth copy of block B}

$$l_2 = l_1 \quad\quad\quad \{\text{Start at column } l_2 \text{ of block B}\}$$

  **for** i = 1:M^{(k)}

$$Q_i^{(k)}$$

$$\Gamma_i^{(k)} = Q_c/Q_i^{(k)}$$

$$\underline{x}_i^{(k)}( [n\text{-}1] \Gamma_i^{(k)} + 1 : n\Gamma_i^{(k)}) = \underline{x}( [n\text{-}1]K_c + l_2 : [n\text{-}1] K_c + l_2 + \Gamma_i^{(k)} \text{-} 1)$$

$$l_2 = l_2 + \Gamma_i^{(k)}$$

  **end**

 **end**

$$l_3 = 0 \quad\quad\quad \{l_3 \text{ counts the symbols of user k in matrix B}\}$$

 **for** i = 1:M_{Q}^{(k)}

$$\Gamma_i^{(k)} = Q_c/Q_i^{(k)}$$

$$l_3 = l_3 + \Gamma_i^{(k)}$$

 **end**

$$l_1 = l_1 + l_3 \quad\quad\quad \{\text{Update starting point for next user}\}$$

**end**

The above are examples of suitable algorithms. Other forms of block-banded structure than those specifically shown may be used.

It is possible that control symbols are not considered in the multi-user detection problem; they may be detected by some other means. In such cases, data symbols of chosen characteristics (e.g. those of longest duration) take up the role of control symbols in the above schemes and algorithms. The invention extends to these methods.

In this specification, the following notation and nomenclature is used:

### MATRIX NOTATION

| | |
|---|---|
| $\underline{x}$ | Vector. |
| $X$ | Matrix. |
| $\underline{x}^T, \underline{x}^H$ | Transpose and Hermitian Transpose. |
| $[X]_{i,j}$ | Element of $X$ on the $i^{th}$ row and $j^{th}$ column. |
| $[X]_{n1\,n2,\,m1,\,m2} \equiv X(n_1 : n_2, m_1 : m_2)$ | Sub-matrix of $X$ from rows $n_1$ to $n_2$ and columns $m_1$ to $m_2$. |

**NOMENCLATURE**

| | | |
|---|---|---|
| $^{(m)}A_i^{(k)}$ | $\in C^{\eta(N_cQ_c+W-1)\times N_i(k)_i}$ | Convolution matrix for $i^{th}$ code of $k^{th}$ user at $m^{th}$ antenna. |
| $^{(m)}A^{(k)}$ | $\in C^{\eta(N_cQ_c+W-1)\times N(k)}$ | Convolution matrix for $k^{th}$ user at $m^{th}$ antenna. |
| $^{(m)}\tilde{A}$ | $\in C^{\eta([N_c+1]Q_c+W-1)-1\times N}$ | Un-permuted multi-user convolution matrix at $m^{th}$ antenna. |
| $\tilde{A}$ | $\in C^{K_n\eta([N_c+1]Q_c+W-1)-1\times N}$ | Un-permuted multi-user antenna array convolution matrix. |
| $^{(m)}A$ | $\in C^{\eta([N_c+1]Q_c+W-1)-1\times N}$ | Permuted multi-user convolution matrix at $m^{th}$ antenna. |
| $A$ | $\in C^{K_n\eta([Nc+1]Q_c+W-1)-1\times N}$ | Permuted multi-user antenna array convolution matrix. |
| $^{(m)}B$ | $\in C^{\eta(2Q_c+W-1)-1 \times K_c}$ | Sub-matrix of the multi-user convolution matrix $^{(m)}\hat{A}$ for $m^{th}$ antenna $^{(m)}\hat{A}$. |
| $K$ | $\in R^1$ | Number of users (maximum = 52). |
| $K_c$ | $\in R^1$ | |

$$K_c = \sum_{k=1}^{K}\sum_{i=1}^{M^{(k)}}\frac{Q_c}{Q_i^{(k)}} .$$

| | | |
|---|---|---|
| $M^{(k)}$ | $\in R^1$ | Number of codes associated with the $k^{th}$ user. |
| $N_i^{(k)}$ | $\in R^1$ | Number of symbols transmitted via $i^{th}$ code of $k^{th}$ user in a time-slot. |
| $N^{(k)}$ | $\in R^1$ | Number of symbols transmitted by the $k^{th}$ user in a time-slot. |
| $N$ | $\in R^1$ | Number of symbols transmitted by all users in a time-slot. |
| $\eta$ | $\in R^1$ | Oversampling factor (nominally =2). |
| $Q_c$ | $\in R^1$ | Spreading factor for control symbols. |
| $Q_i^{(k)}$ | $\in R^1$ | Spreading factor for $i^{th}$ code of $k^{th}$ user. |
| $\underline{r}$ | $\in C^{K_n(\eta[_cN+1]+W-1)-1)}$ | Receive vector associated with a time-slot. |
| $^{(m)}\tau^{(\kappa)}$ | $\in R^1$ | Asynchronous delay (samples) for $k^{th}$ user at the $m^{th}$ antenna. |
| $W$ | $\in R^1$ | Channel impulse response length (chips). |
| $\underline{x}_i^{(k)}$ | $\in R^{N_i(k)}$ | Vector of symbols transmitted via $i^{th}$ code of $k^{th}$ user. |
| $\underline{x}^{(k)}$ | $\in R^{N(k)}$ | Vector of symbols transmitted by $k^{th}$ user. |
| $\underline{\tilde{x}}$ | $\in R^N$ | Vector of symbols transmitted by all users in a time-slot. |
| $\underline{x}$ | $\in R^N$ | Permuted vector of symbols transmitted by all users in a time-slot. |

**Claims**

1. A method for detecting user symbols in a multi-user environment, of a code division multiple access, CDMA, communication system, the method comprising altering the order in which information symbols are estimated so as to group user symbols in a block-banded structure, **characterised in that** the multi-user environment is multi-rate, and each user transmits control symbols and at least one group of data symbols, and wherein a convolution matrix $^{(m)}A$ is formed which is block-banded, each block including a number of columns relating to the number of groups of data or symbols transmitted by the users, and grouped according to the respective control symbols and in an order related to the order at which symbols arrive at a receiver.

2. A method as claimed in Claim 1, wherein each block contains a control symbol for each user and one or more data symbols for each user.

3. A method as claimed in Claim 2, wherein each block for n users comprises, sequentially, a control symbol for a first user i, one or more data symbols for the first user i, and, in turn a control symbol for each $(i + 1)^{th}$ user, and one or more data symbols for each $(i + 1)^{th}$ user.

4. A method as claimed in any preceding claim, wherein the number of data symbols for each user within a block is determined by the number of groups of data transmitted by that user and the relative spreading factors of the control symbols and data symbols transmitted by that user.

5. A method as claimed in Claim 4, wherein each user transmits synchronously a number N of control and data symbols, comprising one control symbol and N-1 data symbols, in an epoch, the method comprising shuffling the order to form a number $N_c$ of blocks, where $N_c$ is equal to the number of control symbols transmitted in a time slot, each block being of $K_c$ columns, and shuffling the blocks so that the order of the columns in each block is related to the time at which symbols arrive at a station.

6. A method as claimed in Claim 1, wherein each user transmits a plurality of groups of symbols wherein a convolution matrix $^{(m)}A$ is formed which is block-banded, each block including a number of columns relating to the number of groups of symbols transmitted by the users, and grouped in an order related to the order at which symbols arrive at a receiver.

7. A method as claimed in Claim 6, wherein each block for n users comprises, sequentially, a plurality of data symbols for a first user i, related to the number of groups of data symbols transmitted by that user, and one or more data symbols for each subsequent $(i + 1)^{th}$ user, related to the number of groups of data symbols transmitted by each user

8. A method as claimed in any preceding claim, wherein the number of data symbols for each user within a block is determined by the number of groups of data transmitted by that user and the relative spreading factors of the data symbols transmitted by that user.

9. A method as claimed in Claim 8, wherein each user transmits synchronously a number N of data symbols, in an epoch, the method comprising shuffling the order selected to form a number $N_c$ of blocks, where $N_c$ is equal to the number of data symbols of a selected group transmitted in a time slot, each block being of $K_c$ columns, and shuffling the blocks so that the order of the columns in each block is related to the time at which symbols arrive at a station.

10. A method as claimed in Claim 9, wherein the selected group is the one having symbols of longer duration.

**Patentansprüche**

1. Verfahren zum Erkennen von Benutzersymbolen in einer Mehrbenutzerumgebung eines Kommunikationssystems mit Codemultiplex-Vielfachzugriff CDMA, wobei das Verfahren umfaßt, die Reihenfolge zu ändern, in der Informationssymbole geschätzt werden, um so Benutzersymbole in einer Blockbandstruktur zu gruppieren, **dadurch gekennzeichnet, daß** die Mehrbenutzerumgebung mehrratig ist und jeder Benutzer Steuersymbole und mindestens eine Gruppe von Datensymbolen sendet, und wobei eine Blockband-Faltungsmatrix $^{(m)}A$ gebildet wird, wobei jeder Block eine Anzahl von Spalten enthält, die mit der Anzahl von durch die Benutzer gesendeten Gruppen von Daten oder Symbolen in Beziehung steht, und gemäß den jeweiligen Steuersymbolen und in einer Reihenfolge, die mit der Reihenfolge in Zusammenhang steht, mit der Symbole am Empfänger ankommen, gruppiert wird.

2. Verfahren nach Anspruch 1, wobei jeder Block für jeden Benutzer ein Steuersymbol und für jeden Benutzer ein oder mehrere Datensymbole enthält.

3. Verfahren nach Anspruch 2, wobei jeder Block für n Benutzer sequentiell ein Steuersymbol für einen ersten Benutzer i, ein oder mehrere Datensymbole für den ersten Benutzer i und der Reihe nach ein Steuersymbol für jeden (i+1)-ten Benutzer und ein oder mehrere Datensymbole für jeden (i+1)-ten Benutzer umfaßt.

4. Verfahren nach einem der vorhergehenden Ansprüche, wobei die Anzahl von Datensymbolen für jeden Benutzer in einem Block durch die Anzahl von durch diesen Benutzer gesendeten Gruppen von Daten und die relativen Spreizfaktoren der durch diesen Benutzer gesendeten Steuerssymbole und Datensymbole bestimmt wird.

5. Verfahren nach Anspruch 4, wobei jeder Benutzer in einer Epoche synchron eine Anzahl N von Steuer- und Datensymbolen sendet, die ein Steuersymbol und N-1 Datensymbole umfassen, wobei das Verfahren umfaßt, die Reihenfolge umzubilden, um eine Anzahl $N_c$ von Blöcken zu bilden, wobei $N_c$ gleich der Anzahl von in einem Zeitschlitz gesendeten Steuersymbolen ist, wobei jeder Block aus $K_c$ Spalten besteht, und die Blöcke so umzubilden, daß die Reihenfolge der Spalten in jedem Block mit der Zeit der Ankunft von Symbolen an einer Station in Zusammenhang steht.

6. Verfahren nach Anspruch 1, wobei jeder Benutzer eine Vielzahl von Gruppen von Symbolen sendet, wobei eine Blockband-Faltungsmatrix $^{(m)}A$ gebildet wird, wobei jeder Block eine Anzahl von Spalten enthält, die mit der Anzahl von durch die Benutzer gesendeten Gruppen von Symbolen in Beziehung steht, und in einer Reihenfolge, die mit der Reihenfolge in Zusammenhang steht, mit der Symbole bei einem Empfänger ankommen, gruppiert wird.

7. Verfahren nach Anspruch 6, wobei jeder Block für n Benutzer sequentiell eine Vielzahl von Steuersymbolen für einen ersten Benutzer i, die mit der Anzahl von durch diesen Benutzer gesendeten Gruppen von Datensymbolen in Zusammenhang steht, und ein oder mehrere Datensymbole für jeden nachfolgenden Benutzer (i+1)-ten Benutzer im Zusammenhang mit der Anzahl von durch jeden Benutzer gesendeten Gruppen von Datensymbolen.

**8.** Verfahren nach einem der vorhergehenden Ansprüche, wobei die Anzahl von Datensymbolen für jeden Benutzer in einem Block durch die Anzahl von durch diesen Benutzer gesendeten Gruppen von Daten und die relativen Spreizfaktoren der durch diesen Benutzer gesendeten Steuerssymbole und Datensymbole bestimmt wird.

**9.** Verfahren nach Anspruch 8, wobei jeder Benutzer in einer Epoche synchron eine Anzahl N von Steuer- und Datensymbolen sendet, wobei das Verfahren umfaßt, die gewählte Reihenfolge umzubilden, um eine Anzahl $N_c$ von Blöcken zu bilden, wobei $N_c$ gleich der Anzahl von in einem Zeitschlitz gesendeten Datensymbolen in einer gewählten Gruppe ist, wobei jeder Block aus $K_c$ Spalten besteht, und die Blöcke so umzubilden, daß die Reihenfolge der Spalten in jedem Block mit der Zeit der Ankunft von Symbolen an einer Station in Zusammenhang steht.

**10.** Verfahren nach Anspruch 9, wobei die gewählte Gruppe diejenige ist, die Symbole längerer Dauer aufweist.

**Revendications**

**1.** Procédé de détection de symboles d'utilisateur dans un environnement multi-utilisateurs, d'un système de communication à accès multiple à différence de code, AMDC, le procédé comprenant la modification de l'ordre dans lequel des symboles d'information sont estimés de façon à grouper les symboles d'utilisateur dans une structure en bandes de blocs, **caractérisé en ce que** l'environnement multi-utilisateurs est à débits multiples, et chaque utilisateur transmet des symboles de commande et au moins un groupe de symboles de données, et dans lequel une matrice de convolution $^{(m)}$A en bandes de blocs est formée, chaque bloc comportant un nombre de colonnes lié au nombre de groupes de données ou de symboles transmis par les utilisateurs, et groupés conformément aux symboles de commande respectifs et dans un ordre lié à l'ordre dans lequel les symboles arrivent au niveau d'un récepteur.

**2.** Procédé selon la revendication 1, dans lequel chaque bloc contient un symbole de commande pour chaque utilisateur et un ou plusieurs symboles de données pour chaque utilisateur.

**3.** Procédé selon la revendication 2, dans lequel chaque bloc pour n utilisateurs comprend séquentiellement, un symbole de commande d'un premier utilisateur i, un ou plusieurs symboles de données du premier utilisateur i, et à son tour un symbole de commande de chaque $(i + 1)^e$ utilisateur, et un ou plusieurs symboles de données de chaque $(i + 1)^e$ utilisateur.

**4.** Procédé selon l'une quelconque des revendications précédentes, dans lequel le nombre de symboles de données de chaque utilisateur dans un bloc est déterminé par le nombre de groupes de données transmis par cet utilisateur et les facteurs d'étalement relatifs des symboles de commande et symboles de données transmis par cet utilisateur.

**5.** Procédé selon la revendication 4, dans lequel chaque utilisateur transmet de façon synchrone un nombre N de symboles de commande et de données, comprenant un symbole de commande et N-1 symboles de données, dans une époque, le procédé comprenant le brassage de l'ordre afin de former le nombre $N_c$ de blocs, où $N_c$ est égal au nombre de symboles de commande transmis dans une tranche de temps, chaque bloc étant de $K_c$ colonnes, et le brassage des blocs de telle sorte que l'ordre des colonnes dans chaque bloc soit lié au temps auquel les symboles arrivent à une station.

**6.** Procédé selon la revendication 1, dans lequel chaque utilisateur transmet une pluralité de groupes de symboles dans lequel une matrice de convolution $^{(m)}$A est formée en bandes de blocs, chaque bloc comportant un nombre de colonnes lié au nombre de groupes de données ou de symboles transmis par les utilisateurs, et groupés dans un ordre lié à l'ordre dans lequel les symboles arrivent au niveau d'un récepteur.

**7.** Procédé selon la revendication 6, dans lequel chaque bloc de n utilisateurs comprend, séquentiellement, une pluralité de symboles de données d'un premier utilisateur i, lié au nombre de groupes de symboles de données transmis par cet utilisateur, et un ou plusieurs symboles de données de chaque $(i + 1)^e$ utilisateur suivant, lié au nombre de groupes de symboles de données transmis par chaque utilisateur.

**8.** Procédé selon l'une quelconque des revendications précédentes, dans lequel le nombre de symboles de données de chaque utilisateur dans un bloc est déterminé par le nombre de groupes de données transmis par cet utilisateur et les facteurs d'étalement relatifs des symboles de données transmis par cet utilisateur.

**9.** Procédé selon la revendication 8, dans lequel chaque utilisateur transmet de façon synchrone un nombre N de symboles de données, dans une époque, le procédé comprenant le brassage de l'ordre afin de former le nombre $N_c$ de blocs, où $N_c$ est égal au nombre de symboles de données d'un groupe sélectionné transmis dans une tranche de temps, chaque bloc étant de $K_c$ colonnes, et le brassage des blocs de telle sorte que l'ordre des colonnes dans chaque bloc soit lié au temps auquel les symboles arrivent à une station.

**10.** Procédé selon la revendication 9, dans lequel le groupe sélectionné est celui ayant des symboles de plus longue durée.

# FIG. 1

MUD block

Symbol Epoch

user #K

user #2
user #1

$t$

# FIG. 2

MUD block

Control Symbol

user #K

$\tau^{(K)}$

$\tau^{(2)}$

ISI

user #2
user #1

$t$

FIG. 3

EP 1 065 799 B1

FIG. 4

EP 1 065 799 B1

## FIG. 5

$^{(m)}A =$

*FIG. 6*

EP 1 065 799 B1